# EUROPÄISCHE PATENTSCHRIFT

(11) **EP 3 475 745 B1**
(45) Veröffentlichungstag und Bekanntmachung des Hinweises auf die Patenterteilung: **09.09.2020**
(21) Anmeldenummer: 17732444.9
(22) Anmeldetag: 26.06.2017
(51) Int. Cl.: G02B 6/36

(54) **OPTISCHE DREHKUPPLUNG, VERFAHREN ZUR OPTISCHEN SIGNALÜBERTRAGUNG SOWIE VERWENDUNG DER OPTISCHEN DREHKUPPLUNG**
OPTICAL ROTARY JOINT, METHOD FOR OPTICAL SIGNAL TRANSMISSION AND USE OF THE OPTICAL ROTARY JOINT
JOINT TOURNANT OPTIQUE, PROCÉDÉ DE TRANSMISSION OPTIQUE DE SIGNAUX ET UTILISATION DUDIT JOINT TOURNANT OPTIQUE

(30) Priorität: 27.06.2016 DE 102016211475
(43) Veröffentlichungstag der Anmeldung: 01.05.2019
(73) Patentinhaber: Spinner GmbH, 83620 Feldkirchen-Westerham (DE)
(72) Erfinder: FRIEDSAM, Gerhard, 83620 Feldkirchen (DE); HUBER, Rupert, 83135 Schechen (DE)
(74) Vertreter: Rösler, Uwe
(86) Internationale Anmeldenummer: PCT/EP2017/065621
(87) Internationale Veröffentlichungsnummer: WO 2018/001922

(56) Entgegenhaltungen:
- JP-A- S58 215 613
- JP-A- 2002 048 936
- US-A1- 2005 069 249
- US-B1- 6 246 810

## Beschreibung

### Technisches Gebiet

Die Erfindung bezieht sich auf eine optische Drehkupplung zur optischen Signalübertragung mit wenigstens zwei jeweils um eine Drehachse drehbar gelagerten Einheiten, deren Drehachsen einen lateralen Abstand zueinander aufweisen. Ferner wird ein Verfahren zur optischen Signalübertragung zwischen zwei relativ zueinander drehenden Einheiten gezeigt.

### Stand der Technik

Gattungsgemäße Anordnungen zur Übertragung optischer Signale zwischen zwei relativ zueinander drehbar gelagerten Einheiten sind in vielfältigen Ausführungsformen bekannt und werden zu Zwecken einer uni- oder bidirektionalen Signalübertragung eingesetzt. Optische Drehkupplungen werden zunehmend gegenüber elektrischen, zumeist auf Schleifringkontakten beruhenden - Drehkupplungen wegen ihrer Wartungs- und Verschleißfreiheit bevorzugt. Auch vermögen optische Drehkupplungen hohe Signalübertragungsraten von 40 GBit/s und mehr übertragungssicher zu realisieren.

Einfache optische Drehkupplungen umfassen zwei um eine gemeinsame Drehachse relativ drehbewegliche Einheiten, die jeweils einen längs zur Drehachse orientierten Lichtleiter aufweisen, deren sich längs zur Drehachse gegenüberliegenden Lichtleiterenden einen Spalt begrenzen, über den die optische Signalübertragung erfolgt. Zu Zwecken einer möglichst verlustfreien optischen Signalübertragung ist endseitig an beiden Lichtleitern jeweils eine Linse angebracht. Derartige Drehkupplungen werden auch als lineare optische Drehkupplungen bezeichnet und vermögen Lichtsignale längs eines Lichtausbreitungskanals uni- oder bidirektional zu übertragen.

Zu Zwecken einer optischen Mehrkanalübertragung eignen sich konstruktive Erweiterungen an der vorstehend erläuterten linearen optischen Einkanal-Drehkupplung dergestalt, so dass in konzentrischer Anordnung um die längs zur Drehachse angeordneten Lichtleiter weitere ringförmig ausgebildete Lichtleiteranordnung vorgesehen sind, deren ringflächenförmig ausgebildete Stirnseiten sich längs des Spaltes jeweils axial überlappend gegenüberstehen. Eine derartige Anordnung ist bspw. in der Druckschrift US 4,027,945 beschrieben.

Darüber hinaus ist eine Vielzahl von optischen Drehkupplungen bekannt, die eine optische Kopplung zwischen zwei relativ zueinander drehbar gelagerten Einheiten mit mehr als einem optischen Übertragungskanal vorsehen, die mit Hilfe geeignet angeordneter reflektierender und/oder brechender optischer Elemente längs der einzelnen zu übertragenden Lichtleitwege für eine unterbrechungsfreie optische Signalübertragung sorgen. Beispiele hierzu sind aus den folgenden Druckschriften bekannt: US 5,140,289, DE 21 2012 000 112 U1, US 7,792,400 B1.

Im Unterschied zu den vorstehend beschriebenen optischen Drehkupplungen existieren optische Drehkupplungen, die in Art einer Hohlwelle ausgebildet sind und zwei relativ zueinander drehbare Einheiten besitzen, die einen innen liegenden, zumeist frei zugänglichen Innenraum bzw. Innendurchlass umfassen. In diesem Zusammenhang sei auf die Druckschrift DE 10 2006 054 052 A1 verwiesen, die eine optischen Drehkupplung mit zwei relativ zueinander, um eine Hohlwelle drehbar gelagerten Einheiten beschreibt, wobei eine Lichtübertragung über wenigstens einen lichttransparenten hohlzylinderförmig ausgebildeten Hohlkörper erfolgt und Licht über jeweils sich stirnseitig axial deckungsgleich gegenüberliegende Ringflächen ein- bzw. ausgekoppelt wird.

Die Druckschrift DE 10 2010 036 174 A1 beschreibt eine optischen Drehkupplung zwischen zwei längs einer gemeinsamen Drehachse relativ zueinander drehbar gelagerten Einheiten, die beide längs zur optischen Achse einen innenliegenden, frei zugänglichen Hohlraum umschließen. Zur Lichtübertragung weisen beide Einheiten jeweils eine Vielzahl längs einer Kreislinie stirnseitig endende Lichtleitfasern oder Lichtleitfaserbündel auf, die endseitig jeweils mit optischen Kollimatoren versehen sind. Beide Einheiten sind koaxial um die Drehachse derart angeordnet, so dass sich die jeweils längs der Kreislinie angeordneten optischen Kollimatoren axial beabstandet unmittelbar gegenüberstehen.

In Ergänzung zur vorstehenden optischen Drehkupplung sieht der in der DE 10 2012 021 453 B4 beschriebene optische Drehübertrager zwischen den relativ zueinander drehbar gelagerten Einheiten einen sogenannten Faserspiegel vor, der bspw. in der US 4943137 näher erläutert ist.

Eine weitere alternative optischen Signalübertragung zwischen zwei ringförmig und koaxial zueinander drehbar gelagerten Einheiten ist der Druckschrift US 4,711,516 zu entnehmen, in der eine optische Drehkupplung offenbart ist, die zwei lichttransparente Ringstrukturen mit jeweils rechteckförmigem Ringquerschnitt aufweisen, die axial einander gegenüberliegend einen ringförmigen Spalt einschließen, der mit einem Brechungsindex anpassenden Fluid gefüllt ist. Eine optische Signalübertragung zwischen beiden sich gegenüberliegenden und drehbar gelagerten Ringstrukturen erfolgt über den Fluid gefüllten Zwischenspalt.

Schließlich geht aus der Druckschrift US 6,246,810 B1 eine optische Drehkupplung mit einer ringförmig ausgebildeten Lichtleitfaser hervor, die ein als Lichtgraben ausgebildetes Lichtleitfaserende besitzt sowie an deren gegenüberliegenden Lichtleitfaserabschluss ein Lichtdetektor angeordnet ist. Längs der ringförmigen Trajektorie der Lichtleitfaser wird zur Lichteinkopplung eine Lichtquelle bewegt. Lichtquelle und Lichtleitfaser sind jeweils in separaten aber drehbar relativ zueinander gelagerten Einheiten integriert.

Die Druckschrift JP 2002 048936 A beschreibt einen drei-gliedrigen Roboterarm mit drei jeweils um eine Drehachse drehbar gelagerten Roboterarmgliedern, deren Drehachsen parallel orientiert sind. Die Drehbewegungen der Roboterarme sind über Riemenkopplungen realisiert. Längs jeder Drehachse ist jeweils eine optische Drehkupplung angebracht, die zusammen mit einer optischen Faser einen optischen Übertragungskanal zur optischen Signalübertragung längs des gesamten Roboterarms realisieren.

### Darstellung der Erfindung

Gilt es optische Drehkupplungen zur optischen Signalübertragung zwischen zwei großbauenden drehbar gelagerten Einheiten auszubilden, so ist der technische, konstruktive und kostenmäßige Aufwand zur Realisierung einer derartigen optischen Drehkupplung auf der Basis bisher bekannter Kopplungskonzepten sehr groß, zumal die an der optischen Signalübertragung beteiligten optischen Elemente entsprechend groß zu dimensionieren sind. Es besteht daher die Aufgabe nach einem neuartigen optischen Kopplungskonzept zu suchen, das trotz einer beliebigen System-Skalierung keinen oder nahezu keinen signifikanten technischen, materiellen und kostenspezifischen Mehraufwand in Bezug auf die an der optischen Signalübertragung beteiligten Komponenten erfordert. Die neuartige optische Drehkupplung soll über eine hohe Betriebssicherheit verfügen und Datenübertragungsraten von 40 GBit/s und mehr realisieren. In besonders vorteilhafter Weise soll die optische Drehkupplung zur optischen Signalübertragung zwischen zwei Einheiten dienen, von denen wenigstens eine Einheit hohlwellenartig ausgebildet ist und einen freien Innendurchlass besitzt.

Die lösungsgemäße optische Drehkupplung ist im Anspruch 1 beschrieben. Das der optischen Drehkupplung zugrundeliegende, lösungsgemäße Signalübertragungskonzept ist Gegenstand des Anspruches 12. Anspruch 14 erläutert eine bevorzugte Verwendung der lösungsgemäß ausgebildeten optischen Drehkupplung. Die den Lösungsgedanken in vorteilhafter Weise weiterbildende Merkmale sind Gegenstand der Unteransprüche sowie der weiteren Beschreibung insbesondere unter Bezugnahme auf die Ausführungsbeispiele zu entnehmen.

In Abkehr zu den bekannten optischen Drehkupplungen weist die lösungsgemäß ausgebildete optische Drehkupplung zur optischen Signalübertragung wenigstens zwei relativ zueinander, um jeweils eine Drehachse drehbar gelagerte Einheiten auf, deren Drehachsen zumindest abschnittsweise einen lateralen Abstand zueinander aufweisen. Unter dem Begriff "lateraler Abstand" ist zu verstehen, dass beide Drehachsen jeweils in deren Querrichtung einen definierten Abstand ≠ 0 aufweisen. Nicht notwendiger Weise, jedoch in vorteilhafter Form sind beide Drehachsen parallel zueinander orientiert. Es ist jedoch auch denkbar die Drehachsen mit einem gemeinsamen Schnittpunkt anzuordnen, wobei die Drehachsen in diesem Fall mit Ausnahme des gemeinsamen Schnittpunktes ansonsten ebenfalls lateral zueinander beabstandet sind.

Beide jeweils um eine Drehachse drehbar gelagerte Einheiten sind über einen in Form einer Endlosschleife ausgebildeten Drehübertrager drehbeweglich miteinander zwangsgekoppelt, wobei der Drehübertrager jeweils längs eines Kontaktbereiches an beiden Einheiten anliegt.

Drehfest an beiden Einheiten, d.h. jeweils mitrotierend an den Einheiten, ist jeweils eine optische Einheit angebracht, die wenigstens die folgenden Komponenten umfasst: Wenigstens eine optische Signalleitung, wenigstens einen Strahlteiler und/oder Strahlkoppler, der mit der wenigstens einen optischen Signalleitung optisch gekoppelt ist, sowie wenigstens zwei optische Teilsignalleitungen, die über den Strahlleiter und/oder Strahlkoppler mit der wenigstens einen optischen Signalleitung optisch gekoppelt ist. Wie die weiteren Ausführungen zeigen werden, ist an einer der beiden Einheiten die optische Signalleitung mit einer die optischen Signale emittierenden Lichtquelle mittel- oder unmittelbar verbunden, wohingegen die an der anderen Einheit drehfest angebrachte optische Signalleitung mittel- oder unmittelbar mit einem entsprechenden optischen Lichtdetektor optisch gekoppelt ist.

Ferner sind längs des Drehübertragers wenigstens zwei optische Übertragungsleitungen angebracht. Zu Zwecken der optischen Signalübertragung von der einen drehbar gelagerten Einheit zur anderen drehbar gelagerten Einheit über die am Drehübertrager angebrachten optischen Übertragungsleitungen sind sowohl am Drehübertrager als auch an beiden drehbar gelagerten Einheiten optische Koppelmittel derart angebracht und ausgebildet, so dass sich jeweils eine lösbare optische Signalkopplung am Ort beider Einheiten zwischen einer der Teilsignalleitungen und einer der optischen Übertragungsleitungen simultan ausbildet. Auf diese Weise können optische Signale entweder über die erste und/oder über die zweite optische Übertragungsleitungen zwischen beiden Einheiten unterbrechungsfrei übertragen werden.

In einer ersten Ausführungsvariante weisen die drehbar gelagerten Einheiten jeweils einen peripheren Umfangsrand auf, der derart ausgebildet ist, dass der Drehübertrager längs des jeweiligen Kontaktbereiches mit den drehbar gelagerten Einheiten eine drehfest lösbare Kraft- und/oder Formschlussverbindung ausbildet und dabei beide Einheiten Spannkraft-beaufschlagt umläuft. Die Spannkraft längs des Drehübertragers kann optional durch wenigstens eine zusätzlich mit dem Drehübertrager peripher in Kontakt tretende Umlenkrolle oder Spannvorrichtung kontrolliert werden.

Vorzugsweise sind die peripheren Umfangsränder der drehbar gelagerten Einheiten kreisrund ausgebildet und verfügen somit jeweils über einen Kreisdurchmesser. Beide Kreisdurchmesser sind nicht notwendigerweise identisch und können sich unterscheiden.

Der Drehübertrager ist vorzugsweise in Art eines Keilriemens oder einer Bolzen- oder Rollenkette ausgebildet. Die Länge des Drehübertragers entspricht in vorteilhafter Weise der Summe der Länge beider Kontaktbereiche, die ihrerseits vorzugsweise gleich lang dimensioniert sind, zuzüglich des doppelten Abstandes beider Drehachsen, im Falle zweier parallel zueinander angeordneter Drehachsen. Längs des Drehübertragers sind in jeweils äquidistanten Abständen vier optische Koppelmittel angebracht, die jeweils endseitig mit den zwei optischen Übertragungsleitungen verbunden sind. Die an den drehbar gelagerten Einheiten angebrachten optischen Koppelmittel, die jeweils endseitig an den jeweils beiden optischen Teilsignalleitungen angebracht sind, liegen sich längs des peripheren Umfangsrandes pro drehbar gelagerter Einheit diametral gegenüber.

Der vorzugsweise kettenartig ausgebildete Drehübertrager greift mit den Umfangsrändern beider drehbar gelagerten Einheiten derart in Wirkverbindung, so dass stets gewährleistet ist, dass beim Umlaufen des Drehübertragers um beide drehbar gelagerte Einheiten die am Drehübertrager angebrachten optischen Koppelmittel jeweils mit den an den drehbar gelagerten Einheiten angebrachten optischen Koppelmitteln in bestimmter und wiederkehrende Abfolge in Deckung gelangen, d.h. eine unmittelbar gegenüberliegende Lage zueinander annehmen, sofern sie sich innerhalb des Kontaktbereiches befinden.

Durch eine vorzugsweise identische Dimensionierung von Form und Größe beider drehbar gelagerten Einheiten einschließlich der diesen zugeordneten Kontaktbereichen erfolgt die optische Signalkopplung derart, so dass bei einem ersten hälftigen Umlauf des Drehübertragers um beide drehbar gelagerten Einheiten eine optische Signalübertragung längs einer ersten am Drehübertrager angebrachten optischen Übertragungsleitung stattfindet, deren zugehörige Koppelmittel beim Umlauf innerhalb der Kontaktbereiche und an die Koppelmittel seitens der drehbar gelagerten Einheiten optisch koppeln. Zu Beginn des zweiten hälftigen Umlaufes des Drehübertragers um beide drehbar gelagerten Einheiten werden die im ersten Umlauf optisch gekoppelten Koppelmittel dynamisch entkoppelt und im gleichen Zeitpunkt erfolgt eine optische Kopplung der übrigen Koppelmittel zur optischen Signalübertragung längs der zweiten optischen Übertragungsleitung, die gleichsam wie die Erste mitbeweglich an dem Drehübertrager angebracht ist

In vorteilhafter Weise sind die Kontaktbereiche längs beider drehbar gelagerten Einheiten jeweils größer als ein Viertel der Länge des Drehübertragers dimensioniert, so dass die optische Signalübertragung in überlappender Weise kurzzeitig über beide am Drehübertrager angebrachten optischen Übertragungsleitungen erfolgen kann.

Selbstverständlich ist es möglich, sowohl aus Gründen einer sicheren optischen Signalübertragung als auch aus Gründen einer Multikanalübertragung mehr als zwei optische Übertragungsleitungen längs des Drehübertragers vorzusehen. Gleichfalls ist es möglich an jedem der drehbaren gelagerten Einheiten mehrere optische Signalleitungen und/oder mehrere optische Teilsignalleitungen vorzusehen. In einem derartigen Fall gilt es, jeweils längs des Drehübertragers eine Anzahl n an optischen Koppelmitteln anzubringen, die der Summe aus der Anzahl der an den wenigstens zwei drehbar gelagerten Einheiten angebrachten optischen Koppelmitteln entspricht. Auch in einem derartigen Fall gilt es, die an der drehbar gelagerten Einheit angebrachten optischen Koppelmittel gleich verteilt um die der jeweiligen Einheit zugeordneten Drehachse anzuordnen.

Die Ausbildung der sowohl seitens des Drehübertragers als auch seitens der drehbar gelagerten Einheiten angebrachten optischen Koppelmittel kann vielgestaltig vorgenommen werden. In einer bevorzugten Ausführungsvariante sehen die am Drehübertrager angebrachten optischen Koppelmittel jeweils eine endseitig an der optischen Übertragungsleitung angebrachte, eingehauste Abbildungsoptik, vorzugsweise in Form eines optischen Kollimators vor. Demgegenüber sehen die an den drehbar gelagerten Einheiten angebrachten optischen Koppelmittel jeweils eine endseitig an den Teilsignalleitungen angebrachte, eingehauste Abbildungsoptik sowie ein zusätzliches Befestigungsmittel zum lösbaren Fügen der am Drehübertrager angebrachten eingehausten Abbildungsoptik vor. Das Befestigungsmittel kann bspw. als Klemm-, Schnapp- oder Steckverbindung ausgebildet sein, die für eine zuverlässige lösbare Fügung zwischen beiden jeweils eingehausten Abbildungsoptiken mit einer definiert vorgegebenen, koaxialen Ausrichtung zueinander sorgt. Das Befestigungsmittel ist vorzugsweise rein mechanisch ausgebildet und sorgt zum einen für ein zuverlässiges Zusammenfügen jeweils zweier Abbildungsoptiken sobald sich diese längs des Fügebereiches befinden und ermöglicht zum anderen eine schadlose Lösung der Fügeverbindung sobald die Koppelmittel bzw. die Abbildungsoptiken den Kontaktbereich durch die Umlaufbewegung des Drehübertragers zwischen beiden drehbar gelagerten Einheiten verlassen.

Gilt es ein optisches Signal zwischen einer drehenden und einer stationären Einheit zu übertragen, so sieht ein bevorzugtes Ausführungsbeispiel der lösungsgemäß ausgebildeten optischen Drehkupplung zusätzlich eine an sich bekannte lineare optische Drehkupplung vor, die längs der Drehachse einer der beiden Einheiten angebracht ist, längs der die drehfest an einer der beiden drehbar gelagerten Einheit angebrachte optische Signalleitung orientiert angeordnet ist und einseitig an die lineare optische Drehkupplung optisch ankoppelt. Weitere Einzelheiten hierzu sind der Beschreibung zum illustrierten Ausführungsbeispiel zu entnehmen.

In einer weiteren bevorzugten Ausführungsform ist eine der beiden drehbar gelagerten Einheiten in Art einer Hohlwelle ausgebildet, die einen frei zugänglichen und von der Hohlwelle radial umfassenden Innenbereich aufweist. Eine derartige Ausbildung einer lösungsgemäß ausgebildeten optischen Drehkupplung eignet sich insbesondere für den Einsatz in medizinischen Diagnosevorrichtungen wie beispielsweise Magnetresonanz- bzw. Kernspinapparaturen oder Computertomographen. Ebenfalls sind derartige ringförmig ausgebildete optische Drehkupplungen für Mess- und Analyseanordnungen zur Durchführung zerstörungsfreier Untersuchungen an beliebigen Objekten einsetzbar.

Die lösungsgemäße optische Drehkupplung ist beliebig skalierbar und versursacht selbst bei großbauenden, drehbar gelagerten Einheiten keine nennenswerten Zusatzkosten hinsichtlich aller für die optische Signalübertragung erforderlichen Komponenten. Allenfalls sind die längs des Drehübertragers angebrachten optischen Übertragungsleitungen entsprechend lang zu dimensionieren. Der besondere Charme der Erfindung begründet sich insbesondere darin, dass der technische Aufwand für eine optische Signalübertragung zwischen einer im Durchmesser sehr groß bauenden, drehbar gelagerten Einheit mit freiem Innenraum, wie im Falle eines Computertomographen, dessen Röhre einige Meter messen kann, und einer im Durchmesser kleiner dimensionierten, drehbar gelagerten Einheit, mit einer geschlossenen Struktur, an der eine konventionelle, optische lineare Drehkupplung längs der Drehachse befestigt werden kann, um letztlich eine optische Signalübertragung zu einem externen stationären System zu realisieren, vergleichbar gering gehalten werden kann.

Das der lösungsgemäßen optischen Drehkupplung zugrundeliegende Verfahrenskonzept zeichnet sich dadurch aus, dass an einer der beiden drehbar gelagerten Einheiten aus einem zu übertragenden optischen Signal wenigstens zwei identische optische Signale erzeugt werden, die längs des Drehübertragers jeweils in zeitlich serieller Abfolge zur anderen Einheit der beiden Einheiten übertragen werden, an der das wenigstens eine optisch übertragene Signale mittels einer optischen Signalkopplung längs einer optischen Signalleitung weitergeleitet wird, bspw. mittel- oder unmittelbar zu einem Detektor. Hierbei erfolgt die zeitliche serielle Abfolge der Signalübertragung der wenigstens zwei optischen Signale längs des Drehübertragers zwischen beiden Einheiten ohne zeitlichen Abstand vorzugsweise mit einer zeitlichen Überlappung.

Zu Zwecken der Signalübertragung der optischen Signale längs des Drehübertragers sind längs des Drehübertragers jeweils separate optische Übertragungsleitungen angebracht, über die jeweils ein optisches Übertragungssignal übertragen werden, wobei während einer ersten Hälfte eines vollständigen Umlaufes des Drehübertragers um beide drehbar gelagerten Einheiten eine der beiden Übertragungsleitungen eines der beiden optischen Signale überträgt und während der zweiten Hälfte des vollständigen Umlaufes des Drehübertragers die Andere der beiden Übertragungsleitungen das andere der beiden optischen Signale überträgt.

Selbstverständlich kann ein mittels der optischen Drehkupplung zu übertragendes optisches Signal in mehr als zwei Teilsignale aufgeteilt werden, die jeweils über separat längs des Drehübertragers vorgesehene optische Übertragungsleitungen übertragen werden. Ebenso ist es denkbar und möglich, mehr als zwei optische Signale mit Hilfe der lösungsgemäß ausgebildeten optischen Drehkupplung zu übertragen. Hierzu sind an einer der beiden drehbar gelagerten Einheiten zwei oder mehr optische Signalleitungen drehfest anzubringen, die an jeweils unterschiedlichen Informationslichtquellen angekoppelt sind. Jede der optischen Signalleitungen ist zur Aufteilung eines optischen Signals in wenigstens zwei identische Signale mit einem optischen Strahlteiler gekoppelt, von dem wenigstens zwei optische Teilsignalleitungen ausgehen. Die Signalübertragung erfolgt pro Übertragungskanal in der gleichen Weise wie vorstehend beschrieben.

Die konstruktive Ausgestaltung des Drehübertragers kann grundsätzlich vielgestaltig vorgenommen werden, so lange die Grundfunktion einer zwanghaften kinematischen Kopplung der wenigstens zwei drehbar gelagerten Einheiten erfüllt wird. Denkbar wäre eine Ausgestaltung des Drehübertragers in Form einer Licht leitenden Leitung, die sowohl die kinematische Zwangskopplung zwischen beiden drehbar gelagerten Einheiten als auch die optische Signalübertragung realisiert.

Das lösungsgemäße optische Drehkupplungskonzept lässt auch die Möglichkeit zu, optische Signale zwischen drei oder mehr jeweils drehbar gelagerter Einheiten zu übertragen. So ist es vorstellbar, bspw. eine dritte drehbar gelagerte Einheit vorzusehen, um die der Drehübertrager zusätzlich längs eines Kontaktbereiches umläuft. Die dritte drehbar gelagerte Einheit ist in gleicher Weise mit einer entsprechend konfektionierten optischen Einheit ausgestattet, wie die an den beiden beschriebenen Einheiten angebrachten optischen Einheiten. Der Systemgedanke lässt sich somit grundsätzlich auf die optische Signalübertragung zwischen einer Vielzahl jeweils drehbar gelagerter Einheiten mit lateral zueinander beabstandeten Drehachsen erweitern, die allesamt über einen Drehübertrager rotatorisch zwangsgekoppelt sind.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematischer Aufbau einer lösungsgemäß ausgebildeten optischen Drehkupplung,
- Fig. 2: Darstellung eines Mechanismus zur lösbaren optischen Signalkopplung zwischen einer Teilsignalleitung und einer der optischen Übertragungsleitungen,
- Fig. 3: Darstellung von endseitig an einer Teilsignalleitung sowie einer optischen Übertragungsleitung angebrachten, eingehausten optischen Abbildungsoptiken sowie
- Fig. 4: schematischer Aufbau einer lösungsgemäß ausgebildeten, optischen Drehkupplung mit unterschiedlich dimensionierten drehbaren Einheiten.

### Wege zur Ausführung der Erfindung, gewerbliche Verwendbarkeit

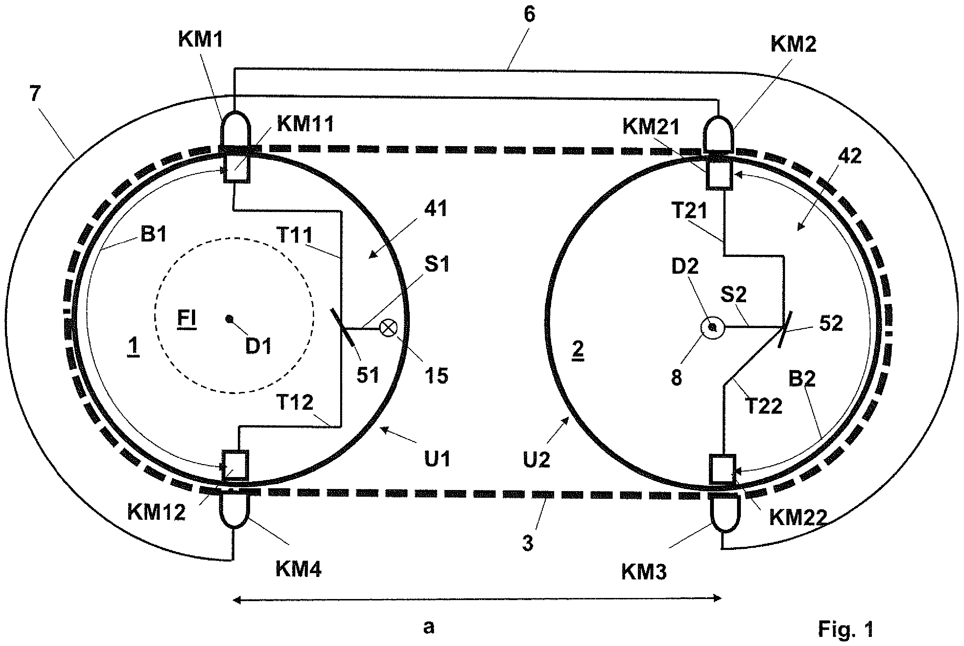

Figur 1 zeigt eine schematische Darstellung einer optischen Drehkupplung zur optischen Signalübertragung zwischen zwei jeweils um eine Drehachse D1 und D2 drehbar gelagerten Einheiten 1, 2. Beide drehbar gelagerten Einheiten 1, 2 sind kinematisch über einen Drehübertrager 3 drehbeweglich zwangsgekoppelt, das heißt der Drehübertrager 3, vorzugsweise in Form eines Keilriemens, Zahnriemens oder einer Bolzen- oder Rollenkette, liegt längs jeweils eines wenigstens halbkreisbogenförmig ausgebildeten Kontaktbereiches B1, B2 unter Ausbildung einer Form- und/oder Reibschlussverbindung umlaufend an beiden drehbar gelagerten Einheiten 1, 2 an. Die Drehachsen beider Einheiten 1, 2 weisen einen lateralen Abstand a auf und sind parallel zueinander orientiert.

Zur optischen Signalübertragung zwischen beiden drehbar gelagerten Einheiten 1, 2 sind an beiden Einheiten 1, 2 jeweils eine optische Einheit 41, 42 drehfest angebracht, die folgende optische Komponenten umfassen. Eine optische Signalleitung S1, S2, längs der ein optisches Signal zu- bzw. abgeführt wird. Die optische Signalleitung S1, S2 ist jeweils mit einem Strahlteiler bzw. Strahlkoppler 51, 52 optisch gekoppelt. An den Strahlteiler bzw. Strahlkoppler 51, 52 sind jeweils zwei optische Teilsignalleitungen T11, T12, T21, T22 optisch angekoppelt. Die Enden der optischen Teilsignalleitungen T11, T12, T21, T22 sind mit optischen Koppelmittel KM11, KM12, KM21, KM22 optisch verbunden. In vorteilhafter Weise sind die endseitig an den optischen Teilsignalleitungen T11, T12, T21, T22 angebrachten optischen Koppelmittel KM11, KM12, KM21, KM22 in Form eingehauster optischer Abbildungsoptikenausgebildet, die am oder nahe des Umfangrandes U1, U2 der jeweiligen optischen Einheit 1, 2 drehfest angebracht sind. Wie aus Figur 1 zu entnehmen ist, sind die optischen Koppelmittel KM11, KM12, KM21, KM22 an den drehbar gelagerten Einheiten 1, 2 jeweils diametral gegenüberliegend zur Drehachse D1, D2 angeordnet.

Zu Zwecken der optischen Signalübertragung von der ersten zur zweiten drehbar gelagerten Einheit 1, 2 sind längs des kettenartig ausgebildeten Drehübertragers 3 vier optische Koppelmittel KM1, KM2, KM3, KM4 angebracht, deren Abstände längs des Drehübertragers 3 jeweils äquidistant gewählt sind. Längs und drehfest mit dem Drehübertrager 3 verbunden sind zwei optische Übertragungsleitungen 6, 7 angebracht, von denen die erste Übertragungsleitung 6 die mit dem Drehübertrager 3 fest verbundenen optischen Koppelmittel KM1 und KM3 optisch verbindet und von denen die zweite optische Übertragungsleitung 7 die optischen Koppelmittel KM2 und KM4 miteinander optisch koppelt.

Die geometrischen Abstände zwischen den am Drehübertrager 3 angebrachten optischen Koppelmittel KM1, KM2, KM3, KM4, die Länge des Drehübertragers 3 sowie die Dimensionen der Umfangsränder U1, U2 und der Kontaktbereiche B1, B2 sind derart geometrisch aufeinander abgestimmt, so dass zu Zwecken einer kontinuierlichen optischen Signalübertragung zwischen beiden drehbar gelagerten Einheiten 1, 2 stets gewährleistet ist, dass bei einem vollständigen Umlauf des Drehübertragers 3 um beide drehbar gelagerten Einheiten 1, 2 eine optische Signalübertragung längs wenigstens einer der beiden optischen Übertragungsleitungen 6, 7 erfolgt. Auf diese Weise wird eine unterbrechungsfreie Übertragung optischer Signale über zwei räumlich getrennte Übertragungskanäle realisiert, wobei die optischen Signale in periodisch serieller Abfolge über die erste und zweite Übertragungsleitung übertragen werden.

In der in Figur 1 dargestellten Situation, bei der angenommen sei, dass der Drehübertrager 3 im Uhrzeigersinn um beide drehbar gelagerten Einheiten 1, 2 umläuft, siehe Pfeildarstellung, koppelt das Koppelmittel KM4 optisch an das an der ersten drehbar gelagerten Einheit 1 angebrachte Koppelmittel KM12, zeitgleich koppelt das Koppelmittel KM2 an das an der zweiten drehbar gelagerten Einheit 2 drehfest angebrachte Koppelmittel KM21 optisch an, so dass eine optische Signalübertragung längs der zweiten optischen Übertragungsleitung 7 zwischen beiden drehbar gelagerten Einheiten 1, 2 hergestellt ist. Bewegen sich die zur zweiten optischen Übertragungsanleitung 7 zugehörigen Koppelmittel KM4, KM12 sowie KM2, KM21 jeweils aus den Kontaktbereichen B1, B2, so koppeln die zur ersten optischen Übertragungsleitung 6 zugehörigen optischen Koppelmittel KM1, KM11 sowie KM3, KM12 optisch einander an, so dass die optische Signalübertragung nun über die erste optische Übertragungsleitung 6 erfolgt.

Es sei angenommen, dass die erste optische Signalleitung S1 der ersten drehbar gelagerten Einheit 1 mit einer optischen Signalquelle 15 verbunden ist, deren optische Signale kontinuierlich auf die zweite drehbar gelagerte Einheit 2 zu übertragen sind. Das längs der optischen Signalleitung S1 anliegende optische Signal wird über einen optischen Strahlteiler 51 in zwei identische Teilsignale aufgeteilt, die jeweils längs der optischen Teilsignalleitung T11 und T12 weitergeleitet werden. In dem in Figur 1 dargestellten Fall wird zunächst das optische Signal über die zweite Teilsignalleitung T12 über die Koppelmittel KM12 sowie KM4 in die zweite, längs des Drehübertragers 3 verlaufende optische Übertragungsleitung 7 eingekoppelt, über die das optische Signal über die längs des Kontaktbereiches B2 der zweiten drehbaren gelagerten Einheit 2 optisch miteinander koppelnden Koppelmittel KM2 und KM21 längs der Teilsignalleitung 21 über den Strahlkoppler 52 in die optische Signalleitung S2 am Ort der zweiten drehbar gelagerten Einheit 2 gelangt. Ferner sei angenommen, dass längs der zweiten Drehachse D2 eine an sich bekannte lineare optische Drehkupplung 8 vorgesehen ist, die das längs der optischen Signalleitung S2, die mit der zweiten drehbar gelagerten Einheit 2 mitrotiert, übertragende optische Signale an eine externe, stationäre Einheit (nicht dargestellt) überträgt. Hierzu koppelt die optische Signalleitung S2 längs der Drehachse D2 an einen mit der zweiten Einheit 2 mitrotierenden Teil der linearen optischen Drehkupplung 8 an, die das optisch Signal an einen stationären Teil der Drehkupplung in konventioneller Form überträgt.

Sobald die optische Signalübertragung längs der zweiten optischen Übertragungsleitung 7 durch Auftrennung der diesbezüglichen Koppelmittel KM12, KM4 sowie KM2, KM12 durch den bewegungsbedingten Umlauf des Drehübertragers 3 um beide drehbar gelagerten Einheiten 1, 2 unterbrochen wird, erfolgt die optische Signalübertragung unterbrechungsfrei über die erste optische Übertragungsleitung 6. Hierbei wird das sich längs der ersten Teilsignalleitung T11 ausbreitende optische Teilsignal über die Koppelmittel KM11 und KM1 in die erste optische Übertragungsleitung 6 eingekoppelt, über die eine Signalübertragung zu den Koppelmitteln KM3 und KM22 und nachfolgend über die optische Teilsignalleitung T22 und dem Strahlkoppler 52 in die optische Signalleitung S2 der zweiten drehbar gelagerten Einheit 2 erfolgt.

Durch geeignete Dimensionierung insbesondere der Länge der Kontaktbereiche B1, B2 können die Koppelereignisse zwischen den am Drehübertrager 3 seitlich angebrachten Koppelmittel KM1, KM2, KM3, KM4 und den an den drehbar gelagerten Einheiten 1, 2 angebrachten Koppelmittel KM11, KM12, KM21, KM22 derart aufeinander abgestimmt werden, so dass sich die Koppelereignisse zur Signalübertragung längs der ersten und zweiten optischen Übertragungsleitung 6, 7 zeitlich überschneiden.

Durch die seitlich zueinander versetzte Anordnung der beiden drehbar gelagerten Einheiten 1, 2 ist es in vorteilhafter Weise möglich, beispielsweise die in Figur 1 dargestellte drehbar gelagerte Einheit 1 als Hohlkörper auszubilden, der einen frei zugänglichen Innenraum FI ringförmig umschließt. Somit bietet sich das lösungsgemäße optische Signalübertragungskonzept vorzugsweise für den Betrieb von ringförmigen Analyse- und Untersuchungseinrichtungen an, z.B. für den Einsatz in Kernspin- und Computertomographievorrichtungen.

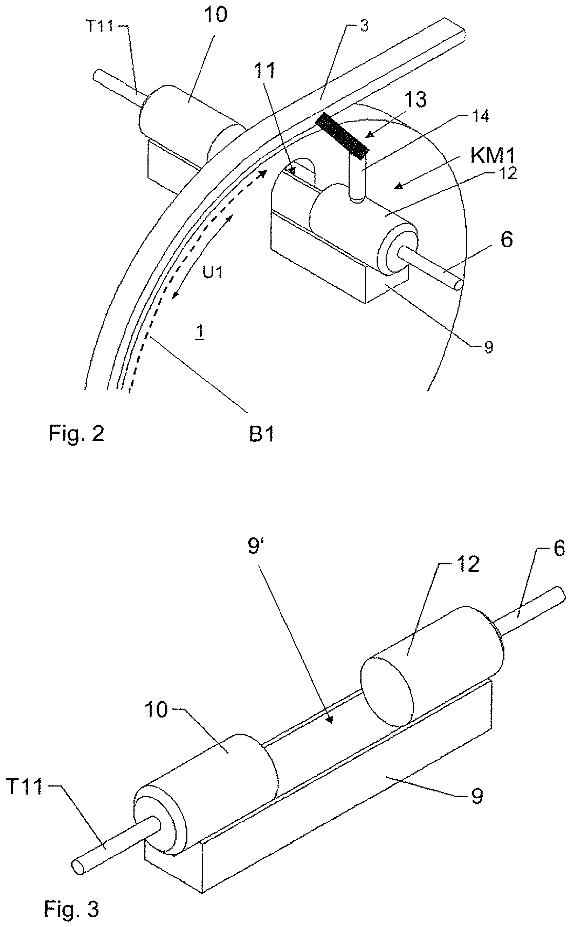

Figur 2 zeigt in perspektivischer Darstellung für eine Realisierungsform der optischen Kopplung zwischen einer an der drehbar gelagerten Einheit 1 drehfest angebrachten optischen Teilsignalleitung T11 und einem am Drehübertrager 3 fest angebrachten optischen Koppelmittel KM1.

Die drehbar gelagerte Einheit 1 weist hierzu an ihrem peripheren Umfangsrand U1 eine vorzugsweise kettenzahnartig oder nutförmig ausgebildete Struktur auf, in die der kettenartig oder keilriemenartig ausgebildete Drehübertrag 3 eingreift, von dem lediglich ein kurzer Abschnitt aus Gründen einer übersichtlicheren Darstellung gezeigt ist.

An der drehbar gelagerten Einheit 1 ist ein Befestigungsmittel 9 fest angeordnet, siehe auch Figur 3, in das eine eingehauste Abbildungsoptik10, die endseitig an der optischen Teilsignalleitung T11 angebracht ist, fest eingefasst ist. Die Abbildungsoptik 10 sorgt für eine optimierte Lichtein- bzw. Lichtauskopplung in die bzw. aus der optischen Teilsignalleitung T11. Die drehbar gelagerte Einheit 1 weist zudem eine Bohrung 11 auf, die koaxial zur Appertur der Abbildungsoptik10 ausgerichtet ist. Überdies verfügt das Befestigungsmittel 9 über einen nutförmig ausgebildeten Aufnahmebereich 9', auf den eine eingehauste Abbildungsoptik12, die endseitig an der ersten Übertragungsleitung 6 angebracht ist, zur losen Auflage gebracht werden kann, so dass sich die Apperturen beider Abbildungsoptiken10 und 12 axial gegenüberliegend in Anlage gebracht werden können.

Die endseitig an der ersten Übertragungsleitung 6 angebrachte, eingehauste Abbildungsoptik12 ist über ein elastisches, vorzugsweise federkraftbeaufschlagtes Haltemittel 13 mitbeweglich längs des Drehübertragers 3 fest angebracht. Das das Haltemittel 13 und die eingehauste Abbildungsoptik12 umfassende Koppelmittel KM1 weist somit eine ortsfeste Zuordnung zum Drehübertrager 3 auf und umläuft mit diesem die drehbar gelagerten Einheiten 1, 2.

Sobald das Koppelmittel KM1 in den Kontaktbereich B1, siehe gestrichelte Linie in Figur 3, der drehbar gelagerten Einheit 1 gelangt, wird die eingehauste Abbildungsoptik12 mittels des Haltemittels 13 gleitend in den nutförmigen Aufnahmebereich 9' der Befestigungsmittels 9 zur Anlage gebracht. Ein zusätzlicher an der drehbar gelagerten Einheit 1 angebrachter Spannmechanismus 14 sorgt für eine zusätzliche Spannkraft-beaufschlagte Anpressung und Sicherung der eingehausten Abbildungsoptik12 relativ zum nutförmigen Aufnahmebereich 9', so dass eine exakt koaxiale Ausrichtung beider Abbildungsoptiken10, 11 gewährleistet ist.

Sobald die in Figur 2 dargestellte optische Koppelsituation durch Weiterdrehen aus dem Kontaktbereich B1 gerät, öffnet der Spannmechanismus 14 und das am Drehübertrager 3 geführte Koppelmittel 1 gleitet kraftfrei aus dem nutförmigen Aufnahmebereich 9' des Befestigungsmittels 9.

Der in Figur 2 illustrierte Koppelmechanismus ist an allen vier Koppelbereichen identisch ausgebildet.

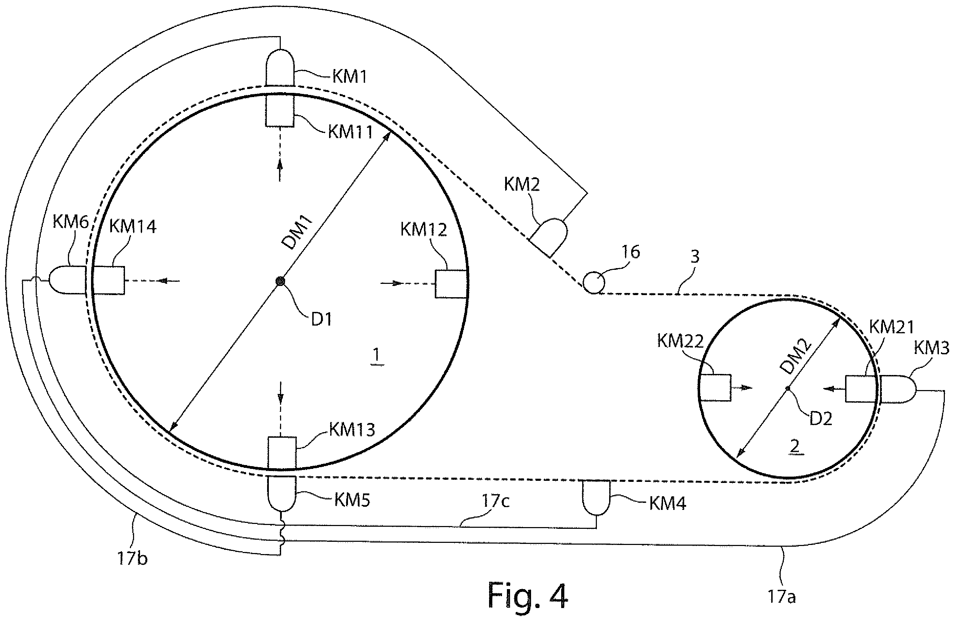

Figur 4 zeigt eine schematische Darstellung einer Ausführungsform der lösungsgemäßen optischen Drehkupplung, die zwei unterschiedlich groß dimensionierte, jeweils um eine Drehachse D1, D2 drehbar gelagerte Einheiten 1, 2 aufweist. Aus Gründen einer übersichtlicheren Darstellung ist auf die zeichnerische Illustration der optischen Einheiten zur Erzeugung und Ableitung der optischen Signale, jeweils auf den drehbar gelagerten Einheiten 1, 2 verzichtet worden. Gleichsam wie bei dem in Figur 1 illustrierten Ausführungsbeispiel sei davon auszugehen, dass die im Durchmesser größer dimensionierte, drehbar gelagerte Einheit 1 eine mitrotierend angebrachte optische Signalquelle aufweist, von der über entsprechende optische Teilsignalleitungen das optische Signal simultan auf alle vier, an der drehbar gelagerten Einheit 1 angebrachten optischen Koppelmittel KM11, KM12, KM13, KM14 übertragen werden. Die an der drehbar gelagerten Einheit 1 angebrachten vier optischen Koppelmittel KM11, KM12, KM13, KM14 sind äquidistant längs des Umfangsrandes der drehbar gelagerten Einheit 1 angeordnet.

Die kleiner dimensionierte drehbare gelagerte Einheit 2 weist einen Durchmesser DM2 auf, der halb so groß dimensioniert ist, wie der Durchmesser DM1 der drehbar gelagerten Einheit 1. Die kleiner dimensionierte drehbar gelagerte Einheit 2 weist zwei sich jeweils diametral gegenüberliegend angebrachte optische Koppelmittel KM21, KM22 auf, die über nicht dargestellte, optische Teilsignalleitungen mit einer linearen optischen Drehkupplung, wie im Fall der Figur 1 verbunden sind.

Längs des in Form einer Endlosschleife ausgebildeten Drehübertragers 3 sind sechs optische Koppelmittel KM1, KM2, KM3, KM4, KM5, KM6 angebracht, die zueinander einen äquidistanten Abstand aufweisen.

Um zu gewährleisten, dass der Drehübertrager 3 insbesondere an der kleiner bemessenen, drehbar gelagerten Einheit 2 wenigstens längs eines halbkreisbogenförmig ausgebildeten Kontaktbereiches an deren Umfangsrand anliegt, ist ein Spannmittel 16 vorgesehen, beispielsweise in Form einer kleinen Umlenkrolle, über die der Drehübertrager 3 spannkraftbeaufschlagt läuft.

Es sei angenommen, dass beide drehbar angeordnete Einheiten 1, 2 im Uhrzeigersinn rotieren. In der in Figur 4 dargestellten Konstellation erfolgt die optische Signalübertragung von der ersten Einheit 1 zur zweiten Einheit 2 über eine optische Übertragungsleitung 17a, die die am Drehübertrager 3 angebrachten optischen Koppelmittel KM3 und KM6 optisch miteinander verbindet. Beide am Drehübertrager 3 angebrachten optischen Koppelmittel KM3 und KM6 befinden sich in optischer Kopplung mit dem jeweils an dem drehbar gelagerten Einheiten 1, 2 angebrachten optischen Koppelmittel KM21 und KM14.

Sobald die optische Signalübertragung über den vorstehend beschriebenen optischen Übertragungsweg rotationsbedingt getrennt wird, gelangen nachfolgend die am Drehübertrager angebrachten optischen Koppelmittel KM2 und KM5 gleichzeitig in optischen Kontakt mit den jeweils an den drehbar gelagerten Einheiten 1, 2 angebrachten optischen Koppelmittel KM22 und K13. Wird auch diese optische Übertragungsleitung rotationsbedingt getrennt, erfolgt eine nahtlos weitere optische Signalübertragung über die am Drehübertrager 3 angebrachte optische Übertragungsleitung 17c, die die Koppelmittel KM1 und KM14 miteinander verbindet. Die in Fig. 4 schematisiert dargestellte Anordnung soll die Möglichkeit demonstrieren, dass eine optische Signalübertragung zwischen zwei drehbar gelagerte Einheiten 1, 2 mit jeweils unterschiedlich dimensionierten Durchmessern DM1 und DM2 möglich ist.

### Bezugszeichenliste

- 1, 2: Drehbar gelagerte Einheiten
- 3: Drehübertrager
- 41, 42: Optische Einheit
- 51, 52: Strahlkoppler, Strahlteiler
- 6, 7: Optische Übertragungsleitung
- 8: Lineare optische Drehkupplung
- 9: Frei zugänglicher Innenraum
- 10: Abbildungsoptik
- 11: Bohrung
- 12: Abbildungsoptik
- 13: Blattfederartig ausgebildeter Träger
- 14: Spannmechanismus
- 15: Optische Signalquelle
- 16: Spannmittel
- 17a, b, c: Optische Übertragungsleitung
- KM1, KM2, KM3, KM4, KM5, KM6: Drehübertrager seitig angebrachtes Koppelmittel
- KM11, KM12, KM13, KM14,: Koppelmittel angebracht an der drehbar gelagerten
- KM21, KM22: Einheit
- D1, D2: Drehachsen
- a: Lateraler Abstand
- S1, S2: Optische Signalleitung
- T11, T12, T21, T22: Optische Teilsignalleitung
- B1, B2: Kontaktbereich
- FI: Frei zugänglicher Innenraum

## Patentansprüche

1. Optische Drehkupplung zur optischen Signalübertragung mit wenigstens zwei jeweils um eine Drehachse (D1, D2) drehbar gelagerten Einheiten (1, 2), deren Drehachsen (D1, D2) zumindest abschnittsweise einen lateralen Abstand (a) zueinander aufweisen,
mit einem an den wenigstens zwei Einheiten (1, 2) jeweils längs eines Kontaktbereiches (B1, B2) anliegenden und in Form einer Endlosschleife ausgebildeten Drehübertrager (3), der die wenigstens zwei Einheiten drehbeweglich miteinander zwangskoppelt,
mit jeweils einer drehfest an beiden Einheiten (1, 2) angebrachten optischen Einheit (41, 42), umfassend wenigstens eine optische Signalleitung (S1, S2), ein Strahlteiler und/oder Strahlkoppler (51, 52), der mit der wenigstens einen optischen Signalleitung (S1, S2) optisch gekoppelt ist, sowie wenigstens zwei optische Teilsignalleitungen (T11, T12, T21, T22), die über den Strahlteiler und/oder Strahlkoppler (51, 52) mit der wenigstens einen optischen Signalleitung (S1, S2) optisch gekoppelt ist,
mit wenigstens zwei am Drehübertrager (3) angebrachten optischen Übertragungsleitungen (6, 7), sowie mit am Drehübertrager (3) angebrachten optischen Koppelmitteln (KM1, KM2, KM3, KM4), sowie an den Einheiten (1, 2) angebrachten optischen Koppelmitteln (KM11, KM12, KM21, KM22) zur Ausbildung jeweils einer lösbaren optischen Signalkopplung zwischen einer der Teilsignalleitungen (T11, T12, T21, T22) und einer der optischen Übertragungsleitungen (6, 7).

2. Optische Drehkupplung nach Anspruch 1,
**dadurch gekennzeichnet, dass** die Drehachsen (D1, D2) parallel zueinander orientiert sind.

3. Optische Drehkupplung nach Anspruch 1 oder 2,
**dadurch gekennzeichnet, dass** eine der beiden Einheiten (1, 2) in Art einer Hohlwelle ausgebildet ist, die einen frei zugänglichen und von der Hohlwelle radial umfassten Innenbereich aufweist.

4. Optische Drehkupplung nach einem der Ansprüche 1 bis 3,
**dadurch gekennzeichnet, dass** die optische Signalleitung (S1, S2) wenigstens einer der beiden Einheiten (1, 2) zumindest bereichsweise längs der der Einheit zugeordneten Drehachse (D1, D2) angeordnet ist, und
dass längs der Drehachse (D1, D2) eine lineare optische Drehkupplung angeordnet und mit der optischen Signalleitung verbunden ist.

5. Optische Drehkupplung nach einem der Ansprüche 1 bis 4,
**dadurch gekennzeichnet, dass** die wenigstens zwei drehbar gelagerten Einheiten (1, 2) jeweils einen peripheren Umfangsrand (U1, U2) aufweisen, der derart ausgebildet ist, dass der Drehübertrager (3) längs des jeweiligen Kontaktbereiches (B1, B2) mit dem Umfangsrand eine drehfeste und lösbare Kraft-und/oder Formschlussverbindung ausbildet und beide Einheiten (1, 2) spannkraftbeaufschlagt umläuft.

6. Optische Drehkupplung nach einem der Ansprüche 1 bis 5,
**dadurch gekennzeichnet, dass** der Drehübertrager (3) in Art eines Keilriemens oder einer Bolzen- oder Rollenkette ausgebildet ist.

7. Optische Drehkupplung nach einem der Ansprüche 1 bis 6,
**dadurch gekennzeichnet, dass** die am Drehübertrager (3) angebrachten optischen Koppelmittel (KM1, KM2, KM3, KM4) sowie die an den Einheiten (1, 2) angebrachten optischen Koppelmittel (KM11, KM12, KM21, KM22) derart angeordnet sind, dass sich bei einem vollständigen Umlauf des Drehübertragers (3) um die Einheiten (1, 2) wenigstens eine optische Signalkopplung innerhalb des Kontaktbereiches der wenigstens zwei Einheiten (1, 2) ausbildet, über die eine optische Signalübertragung zwischen beiden Einheiten (1, 2) erfolgt.

8. Optische Drehkupplung nach einem der Ansprüche 1 bis 7,
**dadurch gekennzeichnet, dass** die am Drehübertrager (3) angebrachten optischen Koppelmittel (KM1, KM2, KM3, KM4) jeweils eine endseitig an der optischen Übertragungsleitung (6, 7) angebrachte, eingehauste, Abbildungsoptik umfassen, und
dass die an den drehbar gelagerten Einheiten (1, 2) angebrachten optischen Koppelmittel (KM11, KM12, KM21, KM22) jeweils eine endseitig an den Teilsignalleitungen (T11, T12, T21, T22) angebrachte, eingehausten Abbildungsoptik sowie ein Befestigungsmittel zum lösbaren Fügen einer am Drehübertrager (3) angebrachten eingehausten, Abbildungsoptik umfassen.

9. Optische Drehkupplung nach einem der Ansprüche 1 bis 8,
**dadurch gekennzeichnet, dass** längs des Drehübertragers (3) eine Anzahl n an optischen Koppelmitteln (KM1, KM2, KM3, KM4) angebracht ist, die der Summe aus der Anzahl der an den wenigstens zwei drehbar gelagerten Einheiten (1, 2) angebrachten optischen Koppelmitteln (KM11, KM12, KM21, KM22) entspricht, und dass die an den drehbar gelagerten Einheiten (1, 2) angebrachten optischen Koppelmittel (KM11, KM12, KM21, KM22) gleichverteilt um die der jeweiligen Einheit zugeordneten Drehachse (D1, D2) angeordnet sind.

10. Optische Drehkupplung nach einem der Ansprüche 1 bis 9,
**dadurch gekennzeichnet, dass** die optischen Signalleitungen (S1, S2) endseitig mit wenigstens einer optischen Signalquelle oder einem optischen Signaldetektor optisch gekoppelt sind.

11. Optische Drehkupplung nach einem der Ansprüche 1 bis 10,
**dadurch gekennzeichnet, dass** die Kontaktbereiche (B1, B2) jeweils Teil eines Kreisumfanges sind, dem jeweils ein Kreisdurchmesser zugeordnet ist, und
dass die Kreisdurchmesser beider drehbare gelagerten Einheiten (1, 2) sich voneinander unterscheiden.

12. Verfahren zur optischen Signalübertragung zwischen zwei jeweils um eine Drehachse (D1, D2), drehbar gelagerten Einheiten (1, 2), deren Drehachsen (D1, D2) zumindest abschnittsweise einen lateralen Abstand (a) zueinander aufweisen und die über einen in Form einer Endlosschleife ausgebildeten Drehübertrager (3) drehbeweglich miteinander zwangskoppelt sind, der beide Einheiten (1, 2) jeweils längs eines Kontaktbereiches (B1, B2) umlaufend berührt, wobei an einer Einheit (1) der beiden Einheiten (1,2) aus einem zu übertragenden optischen Signal wenigstens zwei optische Signale erzeugt werden, die jeweils längs einer am Drehübertrager (3) angebrachten, separaten, optischen Übertragungsleitung (6, 7) in zeitlich serieller Abfolge zur anderen Einheit (2) der beiden Einheiten (1, 2) übertragen werden, an der die wenigstens zwei optischen Signale vermittels einer optischen Signalkopplung längs einer optischen Signalleitung (S2) zusammengeführt werden.

13. Verfahren nach Anspruch 12,
**dadurch gekennzeichnet, dass** während einer ersten Hälfte eines vollständigen Umlaufes des Drehübertragers (3) um beide Einheiten (1, 2) eine der beiden Übertragungsleitungen (6) eines der beiden optischen Signale überträgt und während einer zweiten Hälfte des vollständigen Umlaufes des Drehübertragers (3) die andere der beiden Übertragungsleitungen (7) das andere der beiden optischen Signale überträgt.

14. Verwendung der optischen Drehkupplung nach einem der Ansprüche 1 bis 2. 11 zur optischen Signalübertragung in einem Computertomographen.

## Claims

1. An optical rotating coupling for optical signal transmission with at least two units (1, 2), each rotatably mounted about a rotary axis (D1, D2), the rotary axes (D1, D2) of which, at least in sections, are at a lateral distance (a) from each other,
with a rotary signal transmitter (3) in contact with the at least two units (1, 2) along a respective contact region (B1, B2) and designed in form of an endless loop, wherein the rotary signal transmitter rotatingly permanently couples the at least two units to each other,
with respectively an optical unit (41, 42) non-rotatingly attached to both units (1, 2), which comprises at least an optical signal line (S1, S2), a beam splitter and/or beam coupler (51, 52), which is optically coupled to the at least one optical signal line (S1, S2), as well as at least two optical partial signal lines (T11, T12, T21, T22), which are optically coupled via the beam splitter and/or beam coupler (51, 52) to the at least one optical signal line (S1, S2),
with at least two optical transmission lines (6, 7) attached to the rotary signal transmitter (3), as well as with optical coupling means (KM1, KM2, KM3, KM4) attached to the rotary signal transmitter (3) and with optical coupling means (KM11, KM12, KM21, KM22) attached to the units (1, 2), each for forming a detachable optical signal coupling between one of the partial signal lines (T11, T12, T21, T22) and one of the optical transmission lines (6, 7).

2. The optical rotating coupling according to claim 1, **characterised in that** the rotary axes (D1, D2) are oriented in parallel to each other.

3. The optical rotating coupling according to claim 1 or 2,
**characterised in that** one of the two units (1, 2) is formed in the manner of a hollow shaft, which comprises a freely accessible internal region radially encompassed by the hollow shaft.

4. The optical rotating coupling according to one of claims 1 to 3,
**characterised in that** the optical signal line (S1, S2) of at least one of the two units (1, 2) is arranged, at least in some areas, along the rotary axis (D1, D2) associated with the unit, and
**in that** a linear optical rotating coupling is arranged along the rotary axis (D1, D2) and connected to the optical signal line.

5. The optical rotating coupling according to one of claims 1 to 4,
**characterised in that** the at least two rotatably mounted units (1, 2) each comprise a peripheral circumferential edge (U1, U2), which is arranged such that the rotary signal transmitter (3) forms a torque-proof and detachable force-locked and/or form-locked connection with the circumferential edge along the respective contact region (B1, B2) and revolves around both units (1, 2) while being subjected to a tension force.

6. The optical rotating coupling according to one of claims 1 to 5,
**characterised in that** the rotary signal transmitter (3) is formed in the manner of a V-belt or a bolt chain or roller chain.

7. The optical rotating coupling according to one of claims 1 to 6,
**characterised in that** the optical coupling means (KM1, KM2, KM3, KM4) attached to the rotary signal transmitter (3) as well as the optical coupling means (KM11, KM12, KM21, KM22) attached to the units (1, 2) are arranged such that for a complete revolution of the rotary signal transmitter (3) around the units (1, 2) at least one optical signal coupling is established within the contact region of the at least two units (1, 2), via which an optical signal transmission takes place between both units (1, 2).

8. The optical rotating coupling according to one of claims 1 to 7,
**characterised in that** the optical coupling means (KM1, KM2, KM3, KM4) attached to the rotary signal transmitter (3) each comprise an enclosed imaging optics attached to the end of the optical transmission line (6, 7) and
**in that** the optical coupling means (KM11, KM12, KM21, KM22) attached to the rotatably mounted units (1, 2) each comprise an enclosed imaging optics attached to the end of the partial signal lines (T11, T12, T21, T22) as well as a fastening means for detachably joining an enclosed imaging optics attached to the rotary signal transmitter (3).

9. The optical rotating coupling according to one of claims 1 to 8,
**characterised in that** a number n of optical coupling means (KM1, KM2, KM3, KM4) is attached along the rotary signal transmitter (3), which corresponds to the sum of the number of optical coupling means (KM11, KM12, KM21, KM22) attached to the at least two rotatably mounted units (1, 2) and **in that** the optical coupling means (KM11, KM12, KM21, KM22) attached to the at least two rotatably mounted units (1, 2) are arranged evenly distributed about the rotary axis (D1, D2) associated with the respective unit.

10. The optical rotating coupling according to one of claims 1 to 9,
**characterised in that** the optical signal lines (S1, S2) are optically coupled at their ends to at least one optical signal source or one optical signal detector.

11. The optical rotating coupling according to one of claims 1 to 10,
**characterised in that** the contact regions (B1, B2) are each part of a circle circumference associated respectively to a circle diameter and **in that** the circle diameters of both rotatably mounted units (1, 2) are different from one another.

12. A method for optical signal transmission between two units (1, 2) each rotatably mounted about a rotary axis (D1, D2), the rotary axes (D1, D2) of which, at least in sections, are at a lateral distance (a) from each other, and which are rotatingly permanently coupled to each other via a rotary signal transmitter (3) designed in form of an endless loop, wherein the rotary signal transmitter (3) is in revolving contact with both units (1, 2) along a respective contact region (B1, B2), wherein from one optical signal to be transmitted at least two optical signals are generated at one unit (1) of the two units (1, 2), each of the optical signals being transmitted, in a temporal serial sequence along a separate optical transmission line (6, 7) attached to the rotary signal transmitter (3), to the other unit (2) of the two units (1, 2), at which the at least two optical signals are joined together by means of an optical signal coupling along an optical signal line (S2).

13. The method according to claim 12,
**characterised in that** one of the two transmission lines (6) transmits one of the two optical signals during a first half of one complete revolution of the rotary signal transmitter (3) about both units (1, 2) and the other of the two transmission lines (7) transmits the other of the two optical signals during a second half of one complete revolution of the rotary signal transmitter (3).

14. A use of the optical rotating coupling according to one of claims 1 to 11 for optical signal transmission in a computer tomograph.

## Revendications

1. Accouplement rotatif optique pour transmission optique de signaux avec au moins deux unités (1, 2) logées pouvant tourner respectivement au tour d'un axe de rotation (D1, D2), dont les axes de rotation (D1, D2) comportent au moins par endroits une distance latérale (a) entre eux,
avec un transmetteur rotatif (3) adjacent au moins aux deux unités (1, 2) respectivement le long d'une zone de contact (B1, B2) et constitué sous la forme d'une boucle sans fin, qui accouple par force en un mouvement de rotation au moins les deux unités entre elles,
avec une unité optique (41, 42) placée respectivement solidaire en rotation sur les deux unités (1, 2), comprenant au moins une ligne de signalisation optique (S1, S2), un séparateur de faisceaux et/ou coupleur de faisceaux (51, 52), qui est couplé optiquement avec au moins une ligne de signalisation optique (S1, S2), et au moins deux lignes de signalisation partagées optiques (T11, T12, T21, T22), qui sont couplées optiquement par le biais du séparateur de faisceaux et/ou coupleur de faisceaux (51, 52) avec au moins une ligne de signalisation optique (S1, S2),
avec au moins deux lignes de transmission optiques (6, 7) placées sur le transmetteur rotatif (3) ainsi qu'avec des moyens de couplage optiques (KM1, KM2, KM3, KM4) placés sur le transmetteur rotatif (3), ainsi que des moyens de couplage optiques (KM11, KM12, KM21, KM22) placés sur les unités (1, 2) pour constituer respectivement un couplage optique de signaux séparable entre une des lignes de signalisation partagées (T11, T12, T21, T22) et une des lignes de transmission optiques (6, 7).

2. Accouplement rotatif optique selon la revendication 1,
**caractérisé en ce que** les axes de rotation (D1, D2) sont orientés parallèlement l'un par rapport à l'autre.

3. Accouplement rotatif optique selon la revendication 1 ou 2,
**caractérisé en ce qu'**une des deux unités (1, 2) est constituée à la manière d'un arbre creux qui comporte une zone intérieure librement accessible et entourée radialement par l'arbre creux.

4. Accouplement rotatif optique selon l'une quelconque des revendications 1 à 3,
**caractérisé en ce que** la ligne de signalisation optique (S1, S2) d'au moins une des deux unités (1, 2) est disposée au moins par endroits le long de l'axe de rotation (D1, D2) attribué à l'unité et
**en ce qu'**un accouplement rotatif linéaire optique est disposé le long de l'axe de rotation (D1, D2) et est relié à la ligne de signalisation optique.

5. Accouplement rotatif optique selon l'une quelconque des revendications 1 à 4,
**caractérisé en ce qu'**au moins les deux unités (1, 2) logées pouvant tourner comportent respectivement un bord circonférentiel périphérique (U1, U2), qui est constitué de telle manière que le transmetteur rotatif (3) constitue le long de la zone de contact respective (B1, B2) avec le bord circonférentiel une liaison par conformité de force et/ou de forme solidaire en rotation et séparable et contourne les deux unités (1, 2) avec sollicitation de la force de serrage.

6. Accouplement rotatif optique selon l'une quelconque des revendications 1 à 5,
**caractérisé en ce que** le transmetteur rotatif (3) est constitué à la manière d'une courroie trapézoïdale ou d'une chaîne articulée ou à rouleaux.

7. Accouplement rotatif optique selon l'une quelconque des revendications 1 à 6,
**caractérisé en ce que** les moyens de couplage optiques (KM1, KM2, KM3, KM4) placés sur le transmetteur rotatif (3) et les moyens de couplage optiques (KM11, KM12, KM21, KM22) placés sur les unités (1, 2) sont disposés de telle manière que lors d'une révolution complète du transmetteur rotatif (3) autour des unités (1, 2), au moins un couplage optique de signaux est constitué à l'intérieur de la zone de contact d'au moins les deux unités (1, 2) par le biais duquel a lieu une transmission optique de signaux entre les deux unités (1, 2).

8. Accouplement rotatif optique selon l'une quelconque des revendications 1 à 7,
**caractérisé en ce que** les moyens de couplage optiques (KM1, KM2, KM3, KM4) placés sur le transmetteur rotatif (3) comprennent respectivement un système optique de reproduction intégré, disposé en extrémité sur la ligne de transmission optique (6, 7) et
**en ce que** les moyens de couplage optiques (KM11, KM12, KM21, KM22) montés sur les unités (1, 2) logées pouvant tourner comprennent respectivement un système optique de reproduction intégré, disposé en extrémité sur les lignes de signalisation partagées (T11, T12, T21, T22) ainsi qu'un moyen de fixation pour l'assemblage amovible d'un système optique de reproduction intégré placé sur le transmetteur rotatif (3).

9. Accouplement rotatif optique selon l'une quelconque des revendications 1 à 8,
**caractérisé en ce que** le long du transmetteur rotatif (3) est disposé un nombre n de moyens de couplage optiques (KM1, KM2, KM3, KM4), qui correspond au total du nombre des moyens de couplage optiques (KM11, KM12, KM21, KM22) placés sur au moins les deux unités logées pouvant tourner (1, 2) et
**en ce que** les moyens de couplage optiques (KM11, KM12, KM21, KM22) placés sur les unités logées pouvant tourner (1, 2) sont disposés uniformément répartis autour de l'axe de rotation (D1, D2) attribué à l'unité respective.

10. Accouplement rotatif optique selon l'une quelconque des revendications 1 à 9,
**caractérisé en ce que** les lignes de signalisation optiques (S1, S2) sont couplées optiquement en extrémité avec au moins une source optique de signaux ou un détecteur optique de signaux.

11. Accouplement rotatif optique selon l'une quelconque des revendications 1 à 10,
**caractérisé en ce que** les zones de contact (B1, B2) font respectivement partie d'un périmètre circulaire auquel est attribué respectivement un diamètre circulaire et **en ce que** les diamètres circulaires des deux unités logées pouvant tourner (1, 2) sont différents l'un de l'autre.

12. Procédé de transmission optique de signaux entre deux unités (1, 2) logées pouvant tourner respectivement autour d'un axe de rotation (D1, D2), dont les axes de rotation (D1, D2) comportent au moins par endroits une distance latérale (a) entre eux et qui sont couplées en force l'une à l'autre par mouvement de rotation par un transmetteur rotatif (3) constitué sous la forme d'une boucle sans fin, qui touche en tournant les deux unités (1, 2) respectivement le long d'une zone de contact (B1, B2), sachant que sur une unité (1) des deux unités (1, 2) à partir d'un signal optique à transmettre, au moins deux signaux optiques sont produits, qui sont transmis respectivement le long d'une ligne de transmission (6, 7) optique, séparée placée sur le transmetteur rotatif (3) à l'autre unité (2) des deux unités (1, 2) en une séquence sérielle dans le temps, sur laquelle au moins deux signaux optiques sont réunis au moyen d'un couplage optique de signaux le long d'une ligne de signalisation optique (S2).

13. Procédé selon la revendication 12,
**caractérisé en ce que** pendant une première moitié d'une révolution complète du transmetteur rotatif (3) autour des deux unités (1, 2), une des deux lignes de transmission (6) transmet un des deux signaux optiques et pendant une deuxième moitié de la révolution complète du transmetteur rotatif (3), l'autre des deux lignes de transmission (7) transmet l'autre des deux signaux optiques.

14. Utilisation de l'accouplement rotatif optique selon l'une quelconque des revendications 1 à 11 pour la transmission optique de signaux dans un tomodensitomètre informatisé.
